# EUROPEAN PATENT APPLICATION

(11) **EP 4 683 374 A1**
(43) Date of publication of application: **21.01.2026**
(21) Application number: 23956638.3
(22) Date of filing: 30.11.2023
(51) Int. Cl.: H04W 24/04

(54) **VEHICLE-TO-GROUND TRANSMISSION SYSTEM FOR VEHICLE DATA OF FULLY AUTONOMOUS SUBWAY**

(30) Priority: 25.10.2023 CN 202311391736
(71) Applicant: CRRC Changchun Railway Vehicles Co., Ltd., Changchun, Jilin 130000 (CN)
(72) Inventor: SUN, Wenbin, Changchun, Jilin 130000 (CN); ZHAO, Hongtao, Changchun, Jilin 130000 (CN); LIAO, Shaohui, Changchun, Jilin 130000 (CN); WANG, Jian, Changchun, Jilin 130000 (CN)
(74) Representative: v. Bezold & Partner Patentanwälte - PartG mbB
(86) International application number: PCT/CN2023/135661
(87) International publication number: WO 2025/086401

(57) **Abstract**

The present application belongs to the field of rail transit. Provided is a vehicle-to-ground transmission system for vehicle data of a fully autonomous subway, the system comprising a train network control system, a gateway device, a ground server and a central server, wherein the train network control system is configured to receive vehicle data of each system of a vehicle; the gateway device is configured to perform protocol conversion on the vehicle data from the train network control system and send the vehicle data to the ground server, the ground server is configured to receive the vehicle data from the gateway device and send the vehicle data to the central server; and the central server is configured to receive the vehicle data from the ground server and monitor an operating state of the vehicle in real time. The train network control system and the gateway device both use a redundant design, and the ground server supervises a communication state of the gateway device and sends to the central server the vehicle data from the gateway device having a normal supervision result, thereby solving the problem of data transmission reliability in a fully autonomous subway control system.

## Description

### CROSS-REFERENCE TO RELATED APPLICATION

The present disclosure claims priority to Chinese patent application No. 2023113917361, filed with the Chinese patent office on October 25th, 2023, entitled "VEHICLE-TO-GROUND TRANSMISSION SYSTEM FOR VEHICLE DATA OF FULLY AUTONOMOUS SUBWAY", the entire contents of which are incorporated herein by reference.

### TECHNICAL FIELD

The present disclosure relates to the field of rail transits, and in particular to a vehicle-to-ground transmission system for data of a fully autonomous subway vehicle (i.e., a vehicle-to-ground transmission system for vehicle data of a fully autonomous subway).

### BACKGROUND ART

As the urban population is increasingly congregated, the development of urban rail transit is increasingly complex, and the unmanned operation technology for urban rail transit is therefore beginning to develop. Communication technology is a very important part of realizing the fully autonomous unmanned operation of trains.

Firstly, the train control system includes subsystems of each carriage, and the subsystems need to keep good communication with the total system to realize the system control of the entire train. Secondly, compared with the traditional train driving control system, the fully autonomous unmanned operation control system relies more on the control of the central server. Therefore, a good communication between the fully autonomous unmanned operation control system and the central server is the core for realizing the fully autonomous unmanned operation of the train.

### SUMMARY

Based on the above problems existing in the prior art, the present disclosure provides a vehicle-to-ground transmission system for data of a fully autonomous subway vehicle, including a train network control system, a central server, a gateway device, and a ground server, wherein the train network control system is configured to receive status and fault data of each system of the vehicles; the gateway device is configured to receive data from the train network control system; the gateway device is configured to perform protocol conversion on the data from the train network control system; the gateway device sends data to the ground server; the ground server is configured to send data to the central server and to receive data from the gateway device; and the central server is configured to receive data from the ground server and to monitor operating statuses of the vehicles in real time, wherein the train network control system adopts a redundant design; the gateway device adopts a redundant design; the central server supervises a communication status; and the ground server sends data to the central server based on a supervision result.

In some embodiments, the train network control system includes a first communication device and a second communication device; the gateway device includes a first gateway device and a second gateway device; the first communication device and the second communication device are respectively in communication with the first gateway device and the second gateway device; the central server supervises communication statuses of the first gateway device and the second gateway device; and the ground server sends data received from the first gateway device or sends data received from the second gateway device to the central server based on the communication statuses of the first gateway device and the second gateway device.

In some embodiments, the ground server sends the data sent by the first gateway device to the central server when the supervision result of the communication status of the first gateway device is normal; the ground server sends the data sent by the second gateway device to the central server when a supervision result of the communication status of the first gateway device shows interruption and a supervision result of the communication status of the second gateway device is normal; and the ground server is not permitted to send the data sent by the first gateway device or the second gateway device to the central server when supervision results of the communication statuses of the first gateway device and the second gateway device both show interruption.

In some embodiments, the ground server first receives data from the first gateway device and the second gateway device, and then sends the data to the central server based on the supervision results.

In some embodiments, the ground server first does not receive the data from the first gateway device or second gateway device, but instead decides to receive the data from the first gateway device or second gateway device based on the supervision results, and then sends the data to the central server.

In some embodiments, the central server supervises a communication status of the ground server and provides a supervision result.

In some embodiments, the supervision of the communication status by the central server is based on whether a life signal of a device has changed.

In some embodiments, the gateway device is in data communication with the ground server via a wireless transmission device, and the wireless transmission device adopts a redundant design.

In some embodiments, the train network control system receives and sends data by using MVB network protocol; the central server and the ground server receive and send data by using Ethernet protocol; and the gateway device converts the data between the MVB network protocol and the Ethernet protocol.

In some embodiments, a step of the ground server sending data to the central server based on a supervision result further includes: the ground server selectively receiving the data from the gateway device based on the supervision result, and then sending the data to the central server.

In some embodiments, two gateway devices are provided; the train network control system is connected to the two gateway devices respectively; the two gateway devices are further communicatively connected to ground servers respectively; and the ground servers are communicatively connected to central servers.

Each of the ground servers monitors first device status information of the two connected gateway devices respectively, wherein vehicle data from the normal gateway device is selected and sent to the central server when one of the gateway devices is determined to be abnormal according to the first device status information; and vehicle data from any one of the normal gateway devices is selected and sent to the central server when the two gateway devices are both determined to be normal according to the first device status information.

In some embodiments, when each of the ground servers determines that the two gateway devices are abnormal according to the first device status information of the two gateway devices, abnormal types of the two gateway devices are respectively determined according to the first device status information of the two gateway devices; a reference gateway device without affecting data is determined according to the abnormal types; vehicle data from the reference gateway device is selected and sent to the central server.

In some embodiments, the ground server determines whether each of the gateway devices is abnormal and the corresponding abnormal type according to change information of a life signal of each of the gateway devices.

In some embodiments, two ground servers are provided; the two gateway devices are further communicatively connected to each of the ground servers respectively; and the two ground servers are communicatively connected to the central server.

Each of the central servers monitors second device status information of the two connected ground server respectively, wherein vehicle data from a normal ground server is selected for subsequent processing when one of the ground servers is determined to be abnormal according to the second device status information; and vehicle data from any one of the ground servers is selected for subsequent processing when the two ground servers are determined to be normal according to the second device status information.

In some embodiments, when each of the central servers determines that the two ground servers are abnormal according to the second device status information of the two ground servers, abnormal types of the two ground server are respectively determined according to the second device status information of the two ground server; a reference ground server without affecting data is determined according to the abnormal types; and vehicle data from the reference ground server is selected for subsequent processing.

In some embodiments, the central server determines whether each of the ground servers is abnormal and the corresponding abnormal type according to change information of a life signal of each of the ground servers.

The present disclosure includes the following beneficial effects.
1. Compared to the prior art in which redundant equipment is simply added to achieve the stability of data transmission, the present disclosure ingeniously provides supervision of the communication status, which improves the efficiency and accuracy of the communication based on the high stability of data transmission.
2. The gateway device and the communication device both adopt the redundant design. When one of them is interrupted, it will not affect the real-time transmission of data, thereby ensuring the reliability of the vehicle data transmission.
3. The Ethernet transmission protocol meets the bandwidth requirements for data. All vehicle data can be transmitted to the center, so as to ensure the high bandwidth of the vehicle data transmission.

In order to make the above objective s, features, and advantages of the present disclosure more obvious and understandable, the following preferable embodiments, together with the drawings, are described in detail as follows.

### BRIEF DESCRIPTION OF DRAWINGS

In order to more clearly illustrate the technical solutions in the embodiments of the present disclosure, the drawings to be used in the embodiments will be briefly introduced below. It is to be understood that the following drawings only show certain embodiments of the present disclosure, and therefore should not be regarded as a limitation of the scope. For persons of ordinary skill in the field, other relevant drawings can be obtained according to these drawings without inventive efforts.
FIG. 1 shows a network topology schematic diagram of a vehicle-to-ground transmission system for data of the fully autonomous subway vehicle in the present disclosure;
FIG. 2 shows a topology schematic diagram of vehicle-to-ground communication of a vehicle-to-ground transmission system for data of the fully autonomous subway vehicle in the present disclosure;
FIG. 3 shows a schematic diagram of a data flow of a vehicle-to-ground transmission system for data of the fully autonomous subway vehicle in the present disclosure; and
FIG. 4 shows a life signal decision mechanism of a vehicle-to-ground transmission system for data of the fully autonomous subway vehicle in the present disclosure.

### DETAILED DESCRIPTION OF EMBODIMENTS

In order to make the objectives, technical solutions, and advantages of the embodiments of the present disclosure clearer, the technical solutions in the embodiments of the present disclosure will be clearly and completely described in conjunction with the drawings in the embodiments of the present disclosure. It is clear that the embodiments described are some embodiments of the present disclosure, but not all of the embodiments. The components in the embodiments of the present disclosure generally described and shown in the drawings herein can be arranged and designed in multiple different configurations. Therefore, the following detailed description of embodiments of the present disclosure provided in the drawings is not intended to limit the scope of the present disclosure for which protection is claimed, but rather represents only selected embodiments of the present disclosure. Based on the embodiments of the present disclosure, each of the other embodiments obtained by a person of ordinary skill in the art without inventive efforts, shall fall within the scope of protection of the present disclosure.

The terms "comprise" and "include," "contain," or "characterized by" in the specification, claims, and drawings of the present disclosure are synonymous, and are inclusive or open-ended, and do not exclude additional unrecited elements or method steps. The term "comprise" is a technical term used in claim language, meaning that the recited elements are present, but other elements may also be added and still fall within the scope of the claimed structure or method.

In order to better understand the above objectives, features, and advantages of the present disclosure, the following will provide a detailed description of the present disclosure in conjunction with drawings and specific embodiments. It should be noted that the embodiments of the present disclosure and features in the embodiments can be combined with each other without conflict.

Many specific details in the following description are illustrated to facilitate a full understanding of the present disclosure. The embodiments described are some embodiments of the present disclosure, but not all of the embodiments. Based on the embodiments of the present disclosure, all other embodiments obtained by a person of ordinary skill in the art without inventive efforts, shall fall within the scope of protection of the present disclosure.

Unless otherwise defined, all technical and scientific terms used herein have the same meanings as are commonly understood by those skilled in the art belonging to the present disclosure. The terms used herein in the specification of the present disclosure are only for the purpose of describing specific embodiments and are not intended to limit the present disclosure.

In the present disclosure, reference to an "embodiment" means that a particular feature, structure, or characteristic described in connection with the embodiment may be included in at least one embodiment of the present disclosure. The appearances of the phrase in various places throughout the specification are not necessarily all referring to the same embodiment, nor are separate or alternative embodiments mutually exclusive of other embodiments. It is explicitly and implicitly understood by those skilled in the art that the embodiments described herein may be combined with other embodiments.

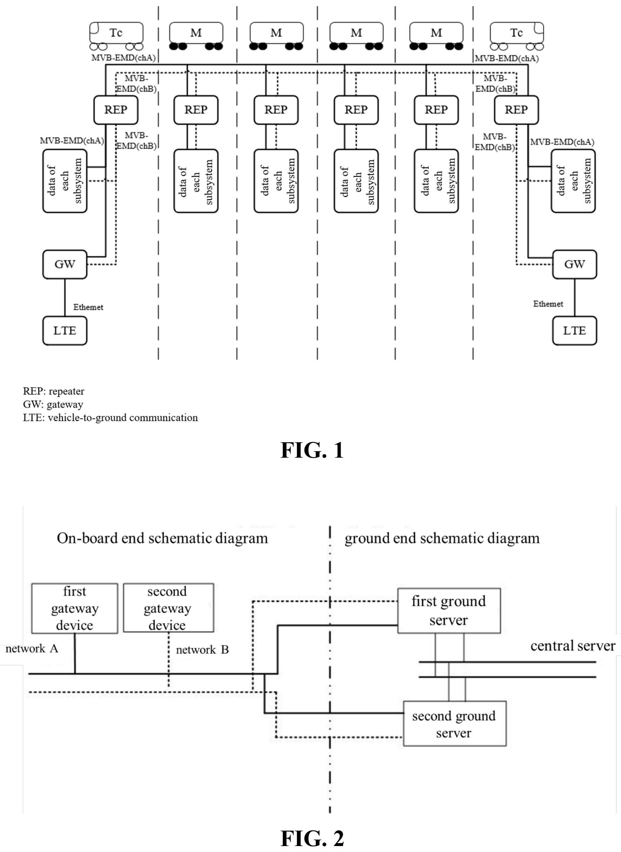

Referring to FIG. 1 to FIG. 3, the present disclosure provides a vehicle-to-ground transmission system for data of a fully autonomous subway vehicle, including a train network control system, a central server, a gateway device, and a ground server.

The train network control system (also known as the train control and management system, abbreviated as TCMS) is configured to receive status and fault data from each system of the vehicles. The central server (also known as the train integrated monitoring system server) is configured to receive data from the ground server and to monitor operating statuses of the vehicles in real time. The gateway device is configured to receive data from the train network control system through the train communication network, such as the MVB network.

The gateway device (also known as MVB-Ethernet gateway, abbreviated as GW) is configured to perform protocol conversions on data from the train network control system. The gateway device can send data to the ground server via a network transmission device, such as a wireless transmission device. The wireless transmission device adopts the redundant design. The ground server is configured to be able to send data to the central server and to receive data from the gateway device.

The train network control system adopts the redundant design, and the gateway device adopts the redundant design. The central server can supervise the train network control system, and the ground server can send data to the central server based on the supervision result of the ground server.

The train network control system includes a first communication device and a second communication device; the gateway device includes a first gateway device and a second gateway device; the first communication device and the second communication device are respectively in communication with the first gateway device and the second gateway device.

The ground server includes a first ground server and a second ground server.

The central server supervises communication statuses of the first gateway device and the second gateway device; and the ground server sends data received from the first gateway device or sends data received from the second gateway device to the central server based on the communication statuses of the first gateway device and the second gateway device.

The supervision result includes the normal communication and the communication interruption.

If the supervision result of the communication status of the first gateway device is normal, the first ground server sends the data sent by the first gateway device to the central server.

If the supervision result of the communication status of the first gateway device shows interruption and the supervision result of the communication status of the second gateway device is normal, the second ground server sends the data sent by the second gateway device to the central server.

If the supervision results of the communication statuses of the first gateway device and the second gateway device both show interruption, the ground server is not permitted to send the data sent by the first gateway device or the second gateway device to the central server.

The first ground server and the second ground server can first receive the data from the first gateway device and the second gateway device, and then send the data to the central server based on the supervision results.

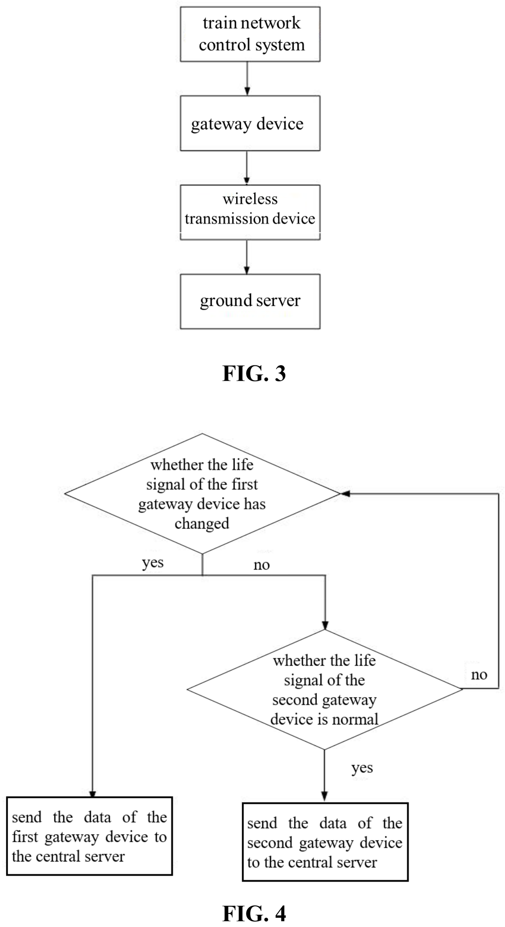

In some other embodiments, referring to FIG. 4, the communication status supervision of the gateway device by the central server is based on the determination of the life signal of the train control system. Specifically, the determination logic of life signals is: determining whether the life signal of the received data changes, for multiple consecutive program execution cycles, wherein the communication status is determined as normal if there is a change, or the communication status is determined to be interrupted if there is no change.

In some other embodiments, eight program execution cycles can be selected in the determination logic of the life signal.

In some other embodiments, one ground server can first receive the data of the first gateway device and the second gateway device simultaneously, and then selectively send the data of the first gateway device or the data of the second gateway device to the central server based on the supervision results.

In some other embodiments, the ground server first does not receive the data from the first gateway device or second gateway device, but instead decides to receive the data from the first gateway device or second gateway device based on the supervision results, and then sends the data to the central server.

In some other embodiments, the central server can supervise a communication status of the ground server and provide a supervision result.

In some other embodiments, the vehicle-to-ground transmission system for data of the fully autonomous subway vehicle further includes a vehicle-to-ground communication device (also known as LTE), which is configured to realize wireless transmission of signals. Specifically, the operation and status data generated by the vehicle is transmitted to a wireless receiving device of the ground server via an LTE wireless channel.

In some other embodiments, the vehicle-to-ground transmission system for data of the fully autonomous subway vehicle further includes a repeater (abbreviated as REP), which is configured to achieve network segment isolation and to achieve signal amplification. Specifically, the network segment isolation is used to divide the entire train MVB control network into individual segments. Each network segment is independent of the other, so that the equipment breakdown in this segment will not affect other network segments. Since that the signal in the MVB network can only travel a maximum distance of 200 meters, and that the train length is about 20 meters, the MVB signals travel back and forth between the trains and the ground, and the total length will exceed 200 meters when multiple groups of trains are connected together. Therefore, the signal needs to be amplified.

In some other embodiments, the gateway device is in data communication with the ground server via a wireless transmission device, and the wireless transmission device adopts a redundant design.

In some other embodiments, the train network control system receives and sends data by using MVB network protocol; the central server and the ground server receive and send data by using Ethernet protocol; and the gateway device can convert the data between the MVB network protocol and the Ethernet protocol.

The present disclosure further provides a method for the vehicle-to-ground transmission system for data of the fully autonomous subway vehicle, including: supervising the train network control system, selecting the data of the gateway device based on the supervision result, and performing data exchange with the central server.

The following is a detailed description of a vehicle-to-ground transmission system for data of the fully autonomous subway vehicle provided by the embodiment of the present disclosure.

The above vehicle-to-ground transmission system for data of the fully autonomous subway vehicle includes a train network control system, a gateway device, a ground server, and a central server.

The train network control system is configured to receive vehicle data from each system of the vehicles.

The gateway device is configured to receive the vehicle data from the train network control system, perform protocol conversion on the vehicle data of the train network control system, and send the vehicle data to the ground server.

The ground server is configured to receive the vehicle data from the gateway device and to send the vehicle data to the central server.

The central server is configured to receive the vehicle data from the ground server and to monitor operating statuses of the vehicles in real time.

The train network control system adopts a redundant design, and the gateway device adopts a redundant design. The ground server supervises the communication status of the gateway device, and the ground server sends, to the central server, the vehicle data from the gateway device having a normal supervision result, based on the supervision result.

In embodiments of the present disclosure, the above vehicle data (referred to as data) specifically includes train status data, train failure data, etc. In practice, as in FIG. 1, the subway vehicle includes a plurality of carriages. The vehicle data herein includes the vehicle data of each system of the vehicles, and specifically includes the vehicle data of each subsystem of each carriage of the train. The train network control system can be understood as a host. The host obtains the vehicle data of each subsystem from each vehicle of the train respectively, and sends it to a gateway device by a Multifunction Vehicle Bus (MVB) protocol. After receiving vehicle data of each subsystem, the gateway device performs the protocol conversion on the vehicle data of each subsystem, i.e., the MVB protocol is converted to the Ethernet protocol, and the vehicle data of each subsystem is sent to the ground server by using the Ethernet protocol. The ground server receives the vehicle data of each subsystem from the above gateway device, and sends the vehicle data of each subsystem to the central server. The central server receives the vehicle data of each subsystem from the ground server, and monitors the operating statuses of the vehicles (specifically, each vehicle of the train) in real time based on the vehicle data of each subsystem.

The above gateway device adopts the redundant design; the ground server supervises the communication status of the gateway device; and the ground server forwards vehicle data from the reliable gateway device to the central server based on the supervision result.

The above gateway device adopting the redundant design is described in detail as below. Two gateway devices are provided; the train network control system is connected to the two gateway devices respectively; the two gateway devices are further communicatively connected to ground servers respectively; and the ground servers are communicatively connected to central servers. Specifically, each of the ground servers monitors first device status information of the two connected gateway devices respectively, wherein vehicle data from the normal gateway device is selected and sent to the central server when one of the gateway devices is determined to be abnormal according to the first device status information; and vehicle data from any one of the normal gateway devices is selected and sent to the central server when the two gateway devices are both determined to be normal according to the first device status information.

If each of the ground servers determines that the two gateway devices are abnormal according to the first device status information of the two gateway devices, abnormal types of the two gateway devices are respectively determined according to the first device status information of the two gateway devices; a reference gateway device without affecting data is determined according to the abnormal types; vehicle data from the reference gateway device is selected and sent to the central server. If the reference gateway device does not exist, a first reminding message is generated and sent to the user side.

In the embodiment of the present disclosure, since the train network control system adopts the MVB bus, and the central server operates in the form of Ethernet network, the transmission of vehicle data (i.e., vehicle data of each subsystem) is realized by converting the MVB network protocol on the train to the Ethernet protocol for transmission through the gateway (GW) device. The gateway device adopts a redundant structure. Even if one of the gateway devices is interrupted, it will not affect the transmission between the train and ground for the vehicle data. The ground server sets the decision logic for determining the validity of data, monitors the first device status information of the two gateway devices in real time, then determines the reliable gateway device based on the monitoring result, and continues to transmit the vehicle data of the reliable gateway device.

Specifically, as shown in FIG. 2, GW1 is the first gateway device (corresponding to network A) and GW2 is the second gateway device (corresponding to network B). The decision logic of the ground server and the two gateway devices is as follows.

The ground server supervises the first device status information of GW1 and GW2 simultaneously.

If the first device status information of GW1 is normal and the first device status information of GW2 is normal, the vehicle data of GW1 is defaulted as reliable, and the vehicle data of network A of GW1 is transmitted to the central server.

If the first device status information of GW1 is normal and the first device status information of GW2 is abnormal, the vehicle data of GWl is regarded as reliable, and the vehicle data of network A of GW1 is transmitted to the central server.

If the first device status information of GW1 is abnormal and the first device status information of GW2 is normal, the vehicle data of GW2 is regarded as reliable, and the vehicle data of network B of GW2 is transmitted to the central server.

If the first device status information of GW1 is abnormal and the first device status information of GW2 is abnormal, a reference GW device without affecting the data is selected from GW1 and GW2 according to abnormal types of GW1 and GW2. For example, if it is determined that the abnormal type of GW1 is network delay and the abnormal type of GW2 is data packaging anomaly, it can be determined that the impact of network delay on the data is relatively small. Therefore, GW1 is selected as the reference GW device, and the vehicle data from GW1 (in this case, the vehicle data received from GW1 may have a delay compared to the vehicle data received from GW2) is sent to the central server.

If the reference GW device cannot be selected, a first reminding message is generated and sent to the user side. For example, if the abnormal type of GW1 is determined to be communication interruption, and the abnormal type of GW2 is also determined to be communication interruption, the data communication between the train and the ground is interrupted, and it cannot continue receiving vehicle data from either GW. Therefore, the first reminding message is generated and sent to the user side, so as to remind the user that both gateway devices are abnormal.

The GW1 and GW2 serve as channel redundancy for each other. Even if one of the networks is completely interrupted, the real-time transmission of vehicle data is not affected, unless both communication networks are interrupted simultaneously, the probability of which is extremely low. The AB network topology structure effectively ensures the real-time and reliability of the vehicle data transmission.

In the embodiments of the present disclosure, according to change information of a life signal of each of the gateway devices, the ground server determines whether each of the gateway devices is abnormal, and determines the corresponding abnormal type. For each gateway device, if the change information of the life signal of the gateway device conforms to the normal change rules, it is determined that the gateway device is normal; and if the change information of the life signal of the gateway device does not conform to the normal change rules, it is to detect the real-time state of the life signal, and to determine the abnormal type of the gateway device based on the real-time status. For example, there is no life signal, which corresponds to the network interruption; the life signal has a long variation cycle and follows a normal change rule (for example, the life signal increases by +1 every second, being 1 at the 1st second, still 1 at the 2nd second, and 3 at the 3rd second), which corresponds to the network delay; and the life signal does not follow the normal variation rule (for example, the life signal increases by +1 every second, being 1 at the 1st second, 10 at the 2nd second, and 4 at the 3rd second), which corresponds to the abnormal data packing.

In specific embodiments, the ground server can monitor the first device status information of two gateway devices and receive the vehicle data of the two gateway devices simultaneously or sequentially. It can also receive the vehicle data from the reliable gateway device based on the monitoring result, without receiving the vehicle data from the abnormal gateway device.

In addition, in the vehicle-to-ground transmission system for data of the fully autonomous subway vehicle provided by the embodiments of the present disclosure, the ground server also adopts the redundant design as follows.

Two ground servers are provided; the two gateway devices are further communicatively connected to each of the ground servers respectively; and the both ground servers are communicatively connected to the central server.

Each of the central servers monitors second device status information of the two connected ground server respectively, wherein vehicle data from a normal ground server is selected for subsequent processing when one of the ground servers is determined to be abnormal according to the second device status information; or vehicle data from any one of the ground servers is selected for subsequent processing when the two ground servers are determined to be normal according to the second device status information.

When each of the central servers determines that the two ground servers are abnormal according to the second device status information of the two ground servers, abnormal types of the two ground servers are respectively determined according to the second device status information of the two ground servers; a reference ground server without affecting data is determined according to the abnormal types; and vehicle data from the reference ground server is selected for subsequent processing.

As shown in FIG. 2, after the central server receives the vehicle data sent from the first ground server and the second ground server, if it is determined that the first ground server and the second ground server are normal based on the second device status information, the vehicle data of the first ground server is trusted (used) by default for the subsequent processing; if it is determined that the first ground server is normal and the second ground server is abnormal based on the second device status information, the first ground server is trusted, and the vehicle data of the first ground server is used for the subsequent processing; if it is determined that the second ground server is normal and the first ground server is abnormal based on the second device status information, the second ground server is trusted, and the vehicle data of the second ground server is used for the subsequent processing; if it is determined that the first ground server and the second ground server are both abnormal based on the second device status information, the abnormal type of the two ground servers is determined, a reference ground server without affecting data is determined according to the abnormal type, and the vehicle data of the reference ground server is used for the subsequent processing; and if the reference ground server does not exist, a second reminding message is generated and sent to the user side, so as to remind the user that two reference servers are abnormal.

For example, if it is determined that the abnormal type of the first ground server is the communication delay, and that the abnormal type of the second ground server is the data packing anomaly, the first ground server is selected as the reference ground server. Thus, it can be determined that the network latency has a relatively small impact on the data. Therefore, the first ground server is selected as a reference ground server, and the subsequent processing is performed based on the vehicle data from the first ground server (in this case, the vehicle data received from the first ground server may have a delay compared to the data received from the second ground server).

If the reference ground server device cannot be selected, a second reminding message is generated and sent to the user side. For example, if the abnormal type of the first ground server is determined to be communication interruption, and the abnormal type of the second ground server is also determined to be communication interruption, the data communication between the train and the ground is interrupted, and the reception of vehicle data from either ground server cannot be continued. Therefore, the second reminding message is generated and sent to the user side, so as to remind the user that two ground servers are abnormal.

The above first ground server and the second ground server are mutually redundant in channels. Even if one of the ground servers is abnormal, the real-time transmission of data is not affected, unless the communication networks of both ground servers are interrupted simultaneously, the probability of which is extremely low. The network topology structure of the first ground server and the second ground server further effectively ensures the real-time and reliability of the vehicle data transmission.

According to change information of a life signal of each of the ground servers, the central server determines whether each of the ground servers is abnormal, and determines the corresponding abnormal type. For each ground server, if the change information of the life signal of the ground server conforms to the normal change rules, it is determined that the ground server is normal; and if the change information of the life signal of the ground server does not conform to the normal change rules, it is to detect the real-time state of the life signal, and to determine the abnormal type of the ground server based on the real-time status. For example, there is no life signal, which corresponds to the network interruption; the life signal has a long variation cycle and follows a normal change rule (for example, the life signal increases by +1 every second, being 1 at the 1st second, still 1 at the 2nd second, and 3 at the 3rd second), which corresponds to the network delay; and the life signal does not follow the normal variation rule (for example, the life signal increases by +1 every second, being 1 at the 1st second, 10 at the 2nd second, and 4 at the 3rd second), which corresponds to the abnormal data packing.

In specific embodiments, the central server can monitor the second device status information of two ground servers and receive the vehicle data of the two ground servers simultaneously or sequentially. It can also receive the vehicle data from the trusted ground server based on the monitoring result, without receiving the vehicle data from the abnormal ground server.

A specific description is given with reference to FIG. 2, taking as an example that the gateway device includes a first gateway device and a second gateway device, and taking a communication interruption as an example of the gateway abnormality type.

The ground server sends the vehicle data sent by the first gateway device to the central server when the supervision result of the communication status of the first gateway device is normal;
the ground server sends the vehicle data sent by the second gateway device to the central server when a supervision result of the communication status of the first gateway device shows interruption and a supervision result of the communication status of the second gateway device is normal; and
the ground server will not send the vehicle data sent by the first gateway device or the second gateway device to the central server when supervision results of the communication statuses of the first gateway device and the second gateway device both show interruption.

Referring to FIG. 2, the ground server supervises the communication status of the networks A and B simultaneously.

If the communication of network A is normal and the communication of network B is normal, the vehicle data of network A is by default regarded as reliable, and the vehicle data of GW1 is transmitted to the central server;
if the communication of network A is normal and the communication of network B is interrupted, the vehicle data of network A is trusted, and the vehicle data of GW1 is transmitted to the central server;
if the communication of network A is interrupted and the communication of network B is normal, the vehicle data of network B is regarded as reliable, and the vehicle data of GW2 is transmitted to the central server; and
if the communication of network A is interrupted and the communication of network B is interrupted, the data communication between the train and the ground is interrupted.

Further, in the vehicle-to-ground transmission system for data of the fully autonomous subway vehicle provided by the embodiments of the present disclosure, the train network control system includes a first host and a second host, wherein the first host respectively is connected to a plurality of carriages and also connected to two gateway devices, so as to obtain vehicle data (i.e., each subsystem data) of each carriage and send the data to the two gateway devices respectively. Specifically, each carriage of the train corresponds to a repeater REP, and the first host acquires the vehicle data (i.e., data of each subsystem) of each carriage through the repeater REP corresponding to each carriage respectively.

The second host is also communicatively connected to the plurality of carriages respectively, and is also connected to two gateway devices. When the first host works, the second host serves as the backup machine for receiving synchronization data sent by the first host and monitoring the device status of the first host. If an anomaly is monitored in the first host, the second host switches to the master device to obtain the data of each subsystem of each carriage, and sends the data to the two gateway devices respectively.

In conjunction with FIG. 1 and FIG. 2, the vehicle-to-ground transmission system for data of the fully autonomous subway vehicle is comprehensively illustrated as follows.

### (1) On-board gateway device

As shown in FIG. 1 and FIG. 2, an MVB-to-Ethernet gateway is provided in the train, which is connected to each subsystem of the train through an MVB interface so as to receive the status and fault data (i.e., vehicle data, hereinafter referred to as data) from each system of the vehicles. The other end of the gateway is connected to a wireless transmission device through an Ethernet interface. The gateway converts the MVB bus vehicle data into the Ethernet protocol, and transmits the vehicle data to the ground server. The train information is sent to the ground server according to the IP addresses and port numbers specified in the IP configuration table. The train gateway 1 (GW1) sends data to the port with IP address 103.24.90.8 in the ground server 1 via the network A channel, and sends data to the port with IP address 103.24.90.10 in the ground server 2 via the network A channel. The train gateway 2 (GW2) sends data to the port with IP address 103.28.90.8 in the ground server 1 via the network B channel, and sends data to the port with IP address 103.28.90.10 in the ground server 2 via the network B channel. In this way, the network A and the network B respectively send the vehicle data to two redundant servers on the ground

### (2) Topology structure

Physical layer: the gateway is physically connected to the LTE hardware by using a standard M12 connector and twisted pair cable.

Data link layer: the MAC (medium access control) layer is based on the IEEE 802.3 standard.

Network layer: the interface at this layer uses the IPv4 protocol as the protocol for the network layer.

Transport layer: the interface at this layer uses the UDP protocol as the transmission protocol.

The train gateway sends the vehicle data information to the ground server 1 and the ground server 2 by the network A and the network B. As shown in FIG. 2, the message information sent in the redundant network is identical.

### (3) Determination mechanism of valid information

Referring to FIG. 2, the ground server supervises the communication status of the networks A and B simultaneously.

If the communication of network A is normal and the communication of Network B is normal, the data of network A is by default regarded as reliable, and the data of GW1 is transmitted to the center;
if the communication of network A is normal and the communication of Network B is interrupted, the data of network A is regarded as reliable, and the data of GW1 is transmitted to the center;
if the communication of network A is interrupted and the communication of network B is normal, the data of network B is regarded as reliable, and the vehicle data of GW2 is transmitted to the central; and
if the communication of network A is interrupted and the communication of network B is interrupted, the data communication between the train and the ground is interrupted.

The network A internet and network B serve as redundant channels to each other. Even if one of the networks is completely interrupted, it does not affect the real-time transmission of data. Only when both communication networks fail simultaneously, will such a failure occur. The probability of this type of failure is extremely low. The AB network topology structure effectively ensures the real-time and reliability of the vehicle data transmission.

Both the vehicle-to-ground transmission system for data of the fully autonomous subway vehicle and the vehicle-to-ground transmission method for data of the fully autonomous subway vehicle of the present disclosure can be practically applied in multiple electronic devices. The electronic device is a type of device that can automatically perform numerical calculations and/or information processing in accordance with preset or stored instructions. The hardware includes, but is not limited to microprocessors, application specific integrated circuit (ASIC), field-programmable gate array (FPGA), digital signal processors (DSP), embedded device, etc.

The electronic device can also be any type of electronic product capable of performing human-computer interaction with the user, such as personal computer, tablet computer, smart phone, personal digital assistant (PDA), game console, internet protocol television (IPTV), smart wearable device, etc. The smart wearable device can be a wearable watch, wearable glasses, or any other wearable devices.

The electronic device can also include a network device and/or a user device. The network device includes, but is not limited to a single network server, a server group composed of multiple network servers, or a cloud composed of a large number of hosts or network servers based on cloud computing.

The network in which the electronic device is located includes, but is not limited to the Internet, wide area network, metropolitan area network, local area network, and virtual private network (VPN), etc.

The above embodiments of the present disclosure are described in detail, and specific examples are applied herein to illustrate the principles and embodiments of the present disclosure, and the description of the above embodiments is only used to help understand the methods of the present disclosure and its core ideas.

It is apparent to those skilled in the art that the present disclosure is not limited to the details of the exemplary embodiments described above, and the present disclosure can be realized in other specific forms without departing from the spirit or essential features of the present disclosure. Therefore, the embodiments are to be regarded as exemplary and non-limiting from any point of view. The scope of the present disclosure is limited by the appended claims and not by the foregoing description, and is therefore intended to include all changes falling within the meaning and scope of the equivalent elements of the claims. Any reference number in the claim should not be regarded as limiting the claim to which it relates. Furthermore, it is clear that the word "comprise" does not exclude other units or steps, and the singular form does not exclude the plural form. The plurality of units or devices stated in the system claims can also be realized by a single unit or device through software or hardware. The terms of first and second are used to denote names and do not indicate any specific order.

Meanwhile, for the ordinary technical personnel in the field, there will be variations in the embodiments and application scope according to the idea of the present disclosure. In summary, the content of the specification should not be construed as a limitation of the present disclosure.

## Claims

1. A vehicle-to-ground transmission system for data of a fully autonomous subway vehicle, comprising a train network control system, a central server, a gateway device, and a ground server, wherein
the train network control system is configured to receive status and fault data of each system of vehicles;
the gateway device is configured to receive data from the train network control system; the gateway device is configured to perform protocol conversion on the data from the train network control system, and the gateway device sends data to the ground server;
the ground server is configured to send data to the central server and to receive data from the gateway device; and
the central server is configured to receive data from the ground server and to monitor operating statuses of the vehicles in real time; and
the train network control system adopts a redundant design; the gateway device adopts a redundant design; the central server supervises a communication status; and the ground server sends data to the central server based on a supervision result.

2. The vehicle-to-ground transmission system for data of the fully autonomous subway vehicle according to claim 1, wherein the train network control system comprises a first communication device and a second communication device; the gateway device comprises a first gateway device and a second gateway device; the first communication device and the second communication device are respectively in communication with the first gateway device and the second gateway device;
the central server supervises communication statuses of the first gateway device and the second gateway device; and the ground server sends data received from the first gateway device or sends data received from the second gateway device to the central server based on the communication statuses of the first gateway device and the second gateway device.

3. The vehicle-to-ground transmission system for data of the fully autonomous subway vehicle according to claim 2, wherein the ground server sends the data sent by the first gateway device to the central server when a supervision result of the communication status of the first gateway device is normal;
the ground server sends the data sent by the second gateway device to the central server when the supervision result of the communication status of the first gateway device shows interruption and a supervision result of the communication status of the second gateway device is normal; and
the ground server is not permitted to send the data sent by the first gateway device or the second gateway device to the central server when supervision results of the communication statuses of the first gateway device and the second gateway device both show interruption.

4. The vehicle-to-ground transmission system for data of the fully autonomous subway vehicle according to claim 3, wherein the ground server first receives data from the first gateway device and the second gateway device, and then sends the data to the central server based on the supervision results.

5. The vehicle-to-ground transmission system for data of the fully autonomous subway vehicle according to claim 3, wherein the ground server first does not receive the data from the first gateway device or second gateway device, but instead decides to receive the data from the first gateway device or second gateway device based on the supervision results, and then sends the data to the central server.

6. The vehicle-to-ground transmission system for data of the fully autonomous subway vehicle according to claim 1, wherein the central server supervises a communication status of the ground server and provides a supervision result.

7. The vehicle-to-ground transmission system for data of the fully autonomous subway vehicle according to claim 1, wherein supervision of the communication status by the central server is based on whether a life signal of a device has changed.

8. The vehicle-to-ground transmission system for data of the fully autonomous subway vehicle according to claim 1, wherein the gateway device is in data communication with the ground server via a wireless transmission device, and the wireless transmission device adopts a redundant design.

9. The vehicle-to-ground transmission system for data of the fully autonomous subway vehicle according to claim 1, wherein the train network control system receives and sends data by using MVB network protocol; the central server and the ground server receive and send data by using Ethernet protocol; and the gateway device converts the data between the MVB network protocol and the Ethernet protocol.

10. The vehicle-to-ground transmission system for data of the fully autonomous subway vehicle according to claim 1, wherein a step of sending data to the central server by the ground server based on a supervision result further comprises: the ground server selectively receiving the data from the gateway device based on the supervision results, and then sending the data to the central server.

11. The vehicle-to-ground transmission system for data of the fully autonomous subway vehicle according to claim 1, wherein two gateway devices are provided; the train network control system is connected to the two gateway devices respectively; the two gateway devices are further communicatively connected to ground servers respectively; and the ground servers are communicatively connected to central servers; and
each of the ground servers monitors first device status information of the two connected gateway devices respectively, wherein vehicle data from the normal gateway device is selected and sent to the central server when one of the gateway devices is determined to be abnormal according to the first device status information; and vehicle data from any one of the normal gateway devices is selected and sent to the central server when the two gateway devices are determined to be normal according to the first device status information.

12. The vehicle-to-ground transmission system for data of the fully autonomous subway vehicle according to claim 11, wherein
when each of the ground servers determines that the two gateway devices are abnormal according to the first device status information of the two gateway devices, abnormal types of the two gateway devices are respectively determined according to the first device status information of the two gateway devices; a reference gateway device without affecting data is determined according to the abnormal types; vehicle data from the reference gateway device is selected and sent to the central server.

13. The vehicle-to-ground transmission system for data of the fully autonomous subway vehicle according to claim 11, wherein
the ground servers determine whether each of the gateway devices is abnormal and a corresponding abnormal type according to change information of a life signal of each of the gateway devices.

14. The vehicle-to-ground transmission system for data of the fully autonomous subway vehicle according to claim 11, wherein two ground servers are provided; the two gateway devices are further communicatively connected to each of the ground servers respectively; and the both ground servers are communicatively connected to the central server, wherein
each of the central servers monitors second device status information of the two connected ground server respectively, wherein vehicle data from a normal ground server is selected for subsequent processing when one of the ground servers is determined to be abnormal according to the second device status information; or vehicle data from any one of the ground servers is selected for subsequent processing when the two ground servers are determined to be normal according to the second device status information.

15. The vehicle-to-ground transmission system for data of the fully autonomous subway vehicle according to claim 14, wherein
when each of the central servers determines that the two ground servers are abnormal according to the second device status information of the two ground servers, abnormal types of the two ground servers are respectively determined according to the second device status information of the two ground servers; a reference ground server without affecting data is determined according to the abnormal types; and vehicle data from the reference ground server is selected for subsequent processing.

16. The vehicle-to-ground transmission system for data of the fully autonomous subway vehicle according to claim 14, wherein
the central server determines whether each of the ground servers is abnormal and a corresponding abnormal type according to change information of a life signal of each of the ground servers.
